Europäisches Patentamt

European Patent Office

Office européen des brevets

(11) Veröffentlichungsnummer: **0 256 561 B1**

(12) **EUROPÄISCHE PATENTSCHRIFT**

(45) Veröffentlichungstag der Patentschrift: **29.07.92**

(21) Anmeldenummer: **87112035.8**

(22) Anmeldetag: **19.08.87**

(51) Int. Cl.5: **A23P 1/16, A23C 9/154, A23C 19/076, A23C 9/137**

(54) Süssware und Verfahren zu deren Herstellung.

(30) Priorität: **19.08.86 DE 3628011**

(43) Veröffentlichungstag der Anmeldung:
**24.02.88 Patentblatt 88/08**

(45) Bekanntmachung des Hinweises auf die
Patenterteilung:
**29.07.92 Patentblatt 92/31**

(84) Benannte Vertragsstaaten:
**BE CH FR IT LI LU**

(56) Entgegenhaltungen:
**FR-A- 2 046 433**
**FR-A- 2 180 014**
**GB-A- 2 057 848**
**US-A- 3 666 493**

(73) Patentinhaber: **Ferrero oHG mbH**

**W-3570 Stadtallendorf 1(DE)**

(72) Erfinder: **Der Erfinder hat auf seine Nennung verzichtet**

(74) Vertreter: **Hansen, Bernd, Dr.rer.nat. et al Hoffmann, Eitle & Partner Patentanwälte Arabellastrasse 4 Postfach 81 04 20 W-8000 München 81(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft eine Süssware in Form einer weichen, mit einem Inertgas geschäumten Masse auf Basis einer Öl-in-Wasser-Emulsion, enthaltend Milchbestandteile, Fettkomponente(n), Zucker und Wasser. Insbesondere betrifft die Erfindung eine proteinhaltige Süssware, deren Konsistenz von einer streichfähigen Creme bis zu einer verhältnismässig dichten, schnittfesten Paste reichen kann.

DE-PS 30 15 825 beschreibt eine Süssware in Form einer aufgeschäumten Masse, die sich aus einer Öl-in-Wasser-Emulsion von Milchbestandteilen, Speisefett, Zucker, Lactose und Wasser zusammensetzt und einen pH-Wert, ähnlich dem der Milch, von 6,2 bis 7,6 aufweist. Die genannte Masse besteht weitgehend aus Quark, Yoghurt und Kondensmilch, und es muss diesbezüglich eine strenge Eignungskontrolle vorgenommen werden; ausserdem müssen die Verfahrensparameter bei der Herstellung der genannten Süssware genauestens eingehalten werden.

In GB-PS 1 261 910 wird ein Verfahren beschrieben, bei dem eine wässrige Dispersion von Milchprotein und Lactose aus Magermilchpulver mit Milchsäure-produzierenden Thermobakterien inkubiert wird. Durch Hinzufügen eines Speisefettes erhält man eine saure Emulsion, die pasteurisiert und anschliessend mit Hilfe eines Inertgases aufgeschäumt wird. Es ergibt sich ein streichfähiges, cremeartiges Produkt von saurem pH-Wert. Aufgrund der fehlenden Kohlenhydrate ist der Nährwert des Produktes jedoch gering, was einen Nachteil desselben darstellt.

Aufgabe der Erfindung ist es, unter Verwendung von Milch, z.B. auch Frischmilch, eine Süssware zu schaffen, die sämtliche in der Milch vorkommenden Salze, Proteine und Lactose enthält, deren Emulsionsbildung durch die Hinzufügung des Johannisbrotkernmehls verbessert ist, die in Form einer Öl-in-Wasser-Emulsion formfest und lange haltbar ist, und die aufgrund ihres leicht säuerlichen Geschmackes sowie ihrer Konsistenz dem Geschmacksempfinden einer Anzahl von Konsumenten zusagt.

Ausserdem soll die Herstellung der Süssware so erfolgen, dass die Lactose und die Fettkomponenten bei der Verbrauchsendtemperatur zwar in kristalliner Form vorliegen, jedoch keine vom Konsumenten wahrnehmbaren Kristalle bilden. Dabei soll z.B. der Zucker im Verbrauchsprodukt in feinstkristalliner Form auskristallisiert sein, so dass einzelne Zuckerkristalle nicht herauszuschmecken sind.

Im weiteren soll bei der Herstellung der Süssware die verwendete (gezuckerte) Kondensmilch ganz oder teilweise durch frische Vollmilch ersetzt werden können. Dies ist deshalb von Bedeutung, weil beim Einsatz von frischer Vollmilch die Verwendung mikrokristalliner Lactose (Impfkristalle) vermieden werden kann.

Ausserdem soll die Süssware gemäss der Erfindung trotz ihres relativ hohen Feuchtigkeitsgehaltes von 46 bis 48 % so stabil sein, dass bei der Pasteurisierung keine Gerinnung derselben eintritt.

Die Erfindung beruht auf der Erkenntnis, dass man durch die Kombination von Milch, Zucker, Johannisbrotkernmehl, Fett und Aromastoffen in aufeinander abgestimmten Mengen und durch genau definierte Herstellungsstufen sowie durch Einstellung des Produktes auf einen pH-Wert von 4,2 bis 5,0 zu einem geschäumten Nahrungsmittel gelangt, das sowohl formfest als auch lange haltbar ist und im übrigen die vorstehende Aufgabe löst.

Die Süssware der eingangs genannten Art ist dadurch gekennzeichnet, dass sie durch folgende Herstellungsstufen erhältlich ist:

(a) Vortemperieren von Quark oder Yoghurt oder einem Gemisch derselben auf 40 bis 50°C, und

(b) Einrühren von Frisch- oder Kondensmilch unter Erhalt des Gemisches A;

(c) homogenes Vermischen von Zucker, Johannisbrotkernmehl sowie DP 45 unter Erhalt des Trockengemisches B;

(d) Herstellen einer pastösen Masse C aus Fettkomponente(n) bei 50 bis 75°C;

(e) Vermischen des Gemisches A mit dem Trockengemisch B und anschliessend

(f) Zugabe der pastösen Masse C unter Rühren bei einer Temperatur von 50 bis 60°C;

(g) im weiteren Zugabe von Aromen und Säureverstärker bis auf einen pH von 4,2 bis 5,0, und anschliessend homogenes 20- bis 25-minütiges Vermischen bei 50 bis 60°C;

(h) Pasteurisieren der Mischung bei einer Temperatur von 95 bis 110°C nicht länger als 20 Sekunden, und anschliessend

(i) Abkühlen der Mischung auf 40 bis 60°C;

(j) Aufschäumen der Mischung durch Einblasen von Inertgas unter Erhalt einer cremeartigen Masse;

(k) Kristallisieren wenigstens eines Teils der Fettkomponente(n) und des Zuckers unter Rühren und Abkühlen der cremeartigen Masse auf nicht mehr als 20°C.

Die Erfindung umfasst auch das Verfahren zur Herstellung der vorgenannten Süssware, wobei das Verfahren durch die Folge der Herstellungsstufen, wie sie vorstehend beschrieben werden, gekennzeichnet ist.

Gemäss der Erfindung werden in der Herstellungsstufe (a) Quark oder Yoghurt oder ein Gemisch derselben, die gewöhnlich bei einer Temperatur von 8 - 12°C angeliefert werden, abgewogen und vorzugsweise bereits im Wiegebehälter auf 40 bis 50°C vortemperiert.

Die Menge an Quark bzw. Yoghurt wird gemäss der Erfindung im Bereich von 30 bis 50 %, vorzugsweise 40 bis 45 %, bezogen auf das Gesamtgewicht der Masse, gewählt. Es ist vorteilhaft, ein Gemisch aus Speisequark und Yoghurt im Verhältnis 1:1 bis 2:1 einzusetzen. Als Speisequark eignet sich insbesondere ein Produkt mit 40 % Fettgehalt, bezogen auf die Trockenmasse. Der verwendete Yoghurt kann ein Produkt mit 3,5 % Fettgehalt oder ein aus entrahmter oder teilentrahmter Milch gewonnenes Produkt darstellen.

Bevorzugt ist z.B. die Verwendung von Yoghurt mit 1,5 % Fettgehalt aus teilentrahmter Milch. Der Lactosegehalt einer aus den vorstehend genannten Milcherzeugnissen gewonnenen Süsswarenmasse liegt vorzugsweise um 5 %, bezogen auf diese Milchprodukte.

In dieses vortemperierte Produkt wird dann die Kondensmilch eingerührt und im Mischbehälter auf 60°C erwärmt. Als Kondensmilch kann gezuckerte Kondensmilch oder gezuckerte Magerkondensmilch verwendet werden. Gemäss der Erfindung ist aber auch der Einsatz von frischer Vollmilch möglich. Im letzteren Fall kann die Zugabe von Lactose als Kristallisationskeime in einem späteren Verfahrensschritt entfallen.

Geeignet ist die Verwendung von teilweise entrahmter, gezuckerter Kondensmilch, die ein Proteinverhältnis von 2,8 bis 3,2 aufweisen soll, wobei man unter "Proteinverhältnis" das Gewichtsverhältnis zwischen dem in der Milch enthaltenen Casein und den Serumproteinen (Lactose-Albumin und Lacto-Globuline) versteht.

Der Proteingehalt der erfindungsgemässen Süsswarenmasse rührt in der Hauptsache von den Lactoproteinen der eingesetzten Milchprodukte her. Der Gesamteiweissgehalt der erfindungsgemässen Süsswarenmasse liegt zwischen 5 - 8 %, vorzugsweise zwischen 6 - 7 %, bezogen auf das Fertigprodukt.

Das Vermischen von Milch mit dem Quark und/oder Yoghurt erfolgt unter Rühren bei 22/11 UpM, dies bedeutet, dass in diesem Falle ein Rührwerk mit Zwei-Stufengeschwindigkeit eingesetzt wird, welches von 11 UpM auf 22 UpM umschaltet.

Gleichzeitig werden in einem Trockenmischer die Trockenkomponenten, bestehend aus Zucker, Johannisbrotkernmehl und gegebenenfalls DP 45, unter Erhalt eines Trockengemisches B homogen vermischt.

In dieser Verfahrensstufe beläuft sich die Zugabe von Johannisbrotkernmehl auf eine Menge von 0,1 - 0,6 Gew.-%, wobei Trocken-Aromen (wie z.B. Vanillin) zugesetzt werden können. Es ist bevorzugt, das Johannisbrotkernmehl, das wasserbindend ist, mit dem Zucker zu vermischen, um eine Verklumpung zu vermeiden.

DP 45 stellt eine Mischung aus Milcheiweiss, Pflanzenfett und Glucose dar.

Die Menge des in dieser Verfahrensstufe zugegebenen Zuckers ist davon abhängig, ob Frischmilch oder gezuckerte Kondensmilch eingesetzt wurde. Die Gesamtmenge an nicht-lactoseartigem Zucker soll 10 und 25 Gew.-%, vorzugsweise 15 - 20 Gew.-%, bezogen auf das Gewicht des Fertigproduktes, betragen. Der hinzugefügte Zucker kann z.B. Saccharose, Glucose, Fructose, Invertzucker sein. Ausserdem kann auch ein Zuckerersatzstoff, wie z.B. Sorbit, zugegeben werden. Der zugefügte Zucker soll vorzugsweise teilweise aus Saccharose und teilweise aus Glucose bestehen.

Infolge des homogenen Vermischens der Trockenkomponenten wird im weiteren Verlauf eine Klumpenbildung weitestgehend vermieden.

Zur gleichen Zeit wird eine Fettmischung aus der bzw. den Fettkomponenten bei einer Temperatur von 50 bis 75°C hergestellt. Als Fettkomponenten eignen sich übliche Speisefette, insbesondere Butterfett. Es ist bevorzugt, dass die Fettkomponente aus 98 bis 99,5 Gew.-% Speisefett und 0,5 bis 2 % Monoglyceriden mit einer emulgierenden Wirkung besteht. Zum Einsatz können auch Pflanzenfette, wie z.B. Palmöl, gelangen, und zwar einzeln oder gemischt mit Butter oder anderen Speisefetten. Gute Resultate wurde z.B. mit zwei Teilen Palmöl pro ein Teil Butter erhalten, wenn die Süsware als Aufstrichcreme eingesetzt wird. Bei der Verwendung als Füllcreme ist der Anteil des Palmöls entsprechend zu erhöhen, z.B. mich acht Teilen Palmöl pro zwei Teile Butter.

Bevorzugt ist auch die Zugabe des Produktes Dimodan ST. Bei Zugabe von Dimodan ST ist es vorteilhaft, dieses bei ca. 70°C zu schmelzen und der Fettmischung unter Rühren (22/11 UpM) in ca. 2 bis 3 Minuten unterzumischen. Dimodan ST stellt ein Mono- und Diglycerid dar (E 471).

Der Gesamtfettgehalt des erfindungsgemässen Produktes liegt zwischen 20 und 30 %, bevorzugt zwischen 25 und 27 %, bezogen auf das Endprodukt.

Im folgenden wird das Gemisch A mit dem Trockengemisch B vermischt und dem erhaltenen Produkt die pastöse Masse C der Fettmischung unter Rühren (vorzugsweise bei 22711 UpM) bei einer Temperatur von 50 bis 60°C, vorzugsweise bei 55 bis 60°C, zugegeben; anschliessend lässt man das Gemisch vorzugsweise ca. 15 Minuten emulgieren.

In der nächsten Herstellungsstufe erfolgt die weitere Zugabe von Aromen und Säureverstärkern zum Erhalt eines pH-Wertes von 4,2 bis 5,0, vorzugsweise 4,5 bis 4,8. Als Aromen eignen sich hier besonders Quarkaroma, Vanillin, Zitronenaroma sowie die Zugabe von Alkohol, wie insbesondere Branntwein. Milchsäure wird in Form einer Lösung bzw. Suspension 50/50 G/V ( = 50 % Milchsäure reinst und 50 % Wasser) zugegeben.

Die so gefertigte Mischung wird zu einer homogenen Masse verarbeitet. Vorteilhafterweise kann dies in einer Korundmühle erfolgen, die im Leitungssystem eingebaut ist und in einen beheizbaren Pufferbehälter mit Rührwerk führt (Korundmühle 300 UpM, Spaltbreite 0,05 bis 1,20; Rührwerk 22/11 UpM, beheizt mit 80°C Wasser). In dieser Herstellungsstufe (g) beträgt die Temperatur der Mischung bevorzugt 55°C und wird während des gesamten Schrittes auf dieser Temperatur gehalten, die Rührzeit beträgt vorzugsweise 22 Minuten.

Die nachfolgende Herstellungsstufe (h) sieht die Pasteurisierung der Mischung bei einer Temperatur von 90 bis 110°C, nicht länger als 20 Sekunden, vor. Die Pasteurisierung wird vorzugsweise in einem Wärmetauscher mit rotierendem Schaber durchgeführt, wie er gewöhnlich bei der Margarineherstellung verwendet wird. Es eignet sich dabei z.B. der Einsatz eines Zylinders mit darin rotierender Messerwelle mit aufgesetzten Abschabemessern. Der Antrieb der Messerwelle ist vorteilhafterweise regulierbar (Mittelwert: 400 UpM). Der Zylinder ist indirekt mit Dampf beheizbar.

Wichtig ist dabei, dass die Emulsion nach Erreichen einer Temperatur von 95 bis 110°C (vorzugsweise 95 - 100°C) nicht länger als 20 Sekunden, vorzugsweise 10 bis 15 Sekunden, bei dieser Temperatur gehalten wird. Es ist bevorzugt, die Pasteurisierungstemperatur von 95 ± 1°C zu wählen, wobei eine Haltezeit von 15 Sekunden gewährleistet sein muss.

Ausserdem ist es vorteilhaft, beim Pasteurisieren darauf zu achten, dass kein Wasserverlust durch Verdunsten eintritt, so dass die anfängliche Gesamtwassermenge in der Endstufe noch im wesentlichen vorhanden ist. Durch diese Behandlung erreicht man sowohl die Pasteurisierung der Masse als auch einen Denaturierungsgrad der Proteine, der im Einklang steht mit den nachfolgend beschriebenen rheologischen Eigenschaften des Endproduktes.

Alle nun folgenden Stufen werden steril durchgeführt und in keiner Phase darf die Tempratur 80°C übersteigen.

In der nächsten Stufe wird in einem technisch äquivalent ausgerüsteten Zylinder, der allerdings mit Wasser (z.B. 11°C) direkt gekühlt wird, die Creme auf 40 bis 60°C, vorzugsweise 60°C, abgekühlt.

Diese Abkühlung kann kontinuierlich durchgeführt werden, indem man einen an den Ausgang der Pasteurisationsvorrichtung angeschlossenen Kratzkühler verwendet. Der Zweck dieses Verfahrensschrittes besteht darin, eine unkontrollierte Ausfällung und Vergrösserung der Lactosekristalle, die bisher in der wässrigen Phase gelöst waren, zu verhindern. Die Lactose besitzt eine erhebliche Tendenz zur Bildung von relativ grossen Kristallen, die im Endprodukt für den Verbraucher sensorisch unangenehm wären. Deshalb wird der genannte Verfahrenschritt bei einer Temperatur durchgeführt, bei welcher die wässrige Phase fast oder ganz mit Lactose gesättigt ist. Eine gegebenenfalls vorgesehene Zugabe von sehr kleinen Lactosekeimkristallen, insbesondere bei Verwendung von Kondensmilch, führt zum Entstehen von unzähligen Kristallisationskeimen, auf denen die gelöste Lactose anschliessend kristallisieren kann, ohne später vom Verbraucher wahrnehmbare Kristalle zu bilden. Eine gegebenenfalls vorgesehene Zugabe von 0,015 bis 0,5 Gew.-% Lactose-Keimkristallen ist ausreichend, um dieses Ergebnis zu erzielen.

Gemäss einer bevorzugten Ausführungsform, die sich besonders für Produkte mit ausgesprochen cremeartiger Konsistenz eignet, wird das Abkühlen der Emulsion von der Pasteurisierungstemperatur (90 bis 110°C) auf die Temperatur von vorzugsweise 60°C in zwei Phasen mit zwischengeschalteter Homogenisierung vorgenommen. D.h., die Masse wird zunächst auf eine Temperatur von 75° bis 80°C abgekühlt und dann in einem normalen Homogenisator mit einem Druck von 150 bis 200 bar (1.5 - 2.10$^7$ Pa) homogenisiert, worauf sie schliesslich in einem zweiten Kratzkühler auf 40 bis 60°C abgekühlt wird. Es hat sich gezeigt, dass mit Hilfe dieses Verfahrensschrittes eine Erhöhung der Viskosität bewirkt wird.

Im folgenden Aufschlagzylinder erfolgt das Aufschäumen der Mischung durch Einblasen von Inertgas, vorzugsweise Stickstoffgas, bei einem Inertgasdruck von vorzugsweise 2 -8 bar (2 - 8.10$^5$ Pa), unter Erhalt einer cremeartigen Masse. In diesem Aufschlagzylinder ist statt der Messerwelle vorzugsweise eine Stiftenwelle integriert, die das vorher in das Leitungssystem eingeführte Inertgas sehr fein verteilt.

In jedem Fall enthält das Produkt ein Inertgas, typischerweise Stickstoff, in fein verteilter Form, im Volumenverhältnis von 20 bis 50 %, vorzugsweise 30 bis 40%, bezogen auf das Volumen des Produktes.

In der nächsten Herstellungsstufe erfolgt das Kristallisieren wenigstens eines Teils der Fettkomponente(n) und des Zuckers unter Rühren und Abkühlen der cremeartigen Masse auf nicht mehr als 20°C, vorzugsweise 16°C. Diese Herstellungsstufe wird vorzugsweise in Zylindern mit Messerwelle durchgeführt,

4

wobei diese Zylinder mit einer Sole von -17°C gekühlt werden. Die Leistung der Zylinder beträgt 400 UpM.

In der vorhergehend beschriebenen gesamten Pasteurisierungs-, Aufschlag- und Kühlungsanlage wird ein Druck von 2 bis 8 bar (2 - 8.10$^5$ Pa) aufgebaut. Durch die nach der Pasteurisierung und dem Aufschlag erfolgende Kühlung und Stickstoffzugabe kristallisieren die Fettanteile in der Creme und verfestigen somit die Emulsion zu einer stabilen, cremigen Form und Struktur. Die so erhaltene Creme wird über eine doppelwandige, temperierte Rohrleitung zu Dosieranlage transportiert.

In der nachfolgenden Tabelle sind die für ein cremeartiges Produkt typischen physikalischen und chemischen Werte genannt

## Tabelle

| Merkmale | Mischung | Fertigcreme |
|---|---|---|
| pH | 4,3 - 4,5 | 4,3 - 4,5 |
| Viskosität | *100.-200.000 mPa.s | **5.-10.000.000 mPa.s |
| AW-Wert *** | 0,94 - 0,97 | 0,92 - 0,96 |
| Dichte | 0,95 - 1.05 | 0,70 - 0,62 |
| Gesamtfett | 25,0 - 27,0 % | 25,0 - 27,0 % |
| Saccharose | 17,0 - 19,0 % | 17,0 - 19,9 % |
| Gesamteiweiss | 6,0 - 7,0 % | 6,0 - 7,0 % |
| Wassergehalt | 47,5 - 49,0 % | 46,0 - 48,0 % |

Anmerkung: Für die Bestimmung der Viskosität wurde ein Viskosimeter Brookfield RVS, Veripath Stand Girant F verwendet.

\*     Brookfield Spindel RVS, 50 UpM bei 20°C

\*\*    Brookfield Spindel F, 2,5 UpM bei 20°C.

\*\*\* Der AW-Wert ist der Messwert des Anteils des freien, ungebundenen Wassers im Produkt.

Wenn nicht anders angegeben, beziehen sich sämtliche Prozentangaben auf das Gewicht.

Die erhaltene Creme eignet sich insbesondere als Cremefüllung für Wiener Massen und Biskuitkuchen. Ausserdem kann die Creme auch in luftdicht verschliessbare Behälter abgefüllt werden, z.B. in Plastikdosen von 300 bis 500 ml, die sich für den Einzelhandelsverkauf eignen.

Ausführungsbeispiel

Um 100 kg des Produktes mit cremeartiger Konsistenz zu erhalten, werden getrennt voneinander 59 kg Gemisch A, 18 kg Gemisch B und 23 kg Gemisch C hergestellt.

Zur Herstellung des Gemisches A verwendet man 25 kg Speisequark mit 40 % Fettgehalt i.TS, sowie 18 kg Yoghurt mit 1,5 % Fettgehalt i.TS aus teilentrahmter Milch. Der Lactosegehalt dieses Gemisches beträgt ca. 5 %. Das Gemisch aus Speisequark und Yoghurt wird dann auf eine Temperatur von 45 - 47°C vortemperiert. Dabei erfolgt das Vortemperieren bereits im Wiegebehälter. Dieses Gemisch wird im folgenden mit 16 l Kondensmilch in einer Mischvorrichtung bei 22/11 UpM verrührt. Der Rührvorgang wird 10 bis 15 Minuten lang fortgesetzt.

Gleichzeitig werden zur Herstellung des Gemisches B in einem Trockenmischer 14 kg Saccharose, 3 kg DP 45 und 0,25 kg Johannisbrotkernmehl homogen vermischt.

Ausserdem wird aus 15 kg Palmöl und 8 kg Butterfett die pastöse Masse C bereitet, wobei die Komponenten auf 60°C erwärmt und 2 bis 3 Minuten lang bei 22/11 UpM gerührt werden.

Im folgenden wird das Gemisch A mit dem Trockengemisch B bei 60°C verrührt und dem erhaltenen Produkt die pastöse Masse C unter Rühren bei 22/11 UpM bei einer Temperatur von 55°C zugegeben. Daraufhin lässt man das Gemisch 15 Minuten lang emulgieren.

Im folgenden werden Aromen in ausreichender Menge und eine Lösung von 50 % Milchsäure in Wasser bis zum Erhalt eines pH-Wertes von 4,6 zugegeben. Anschliessend läuft dieses Gemisch bei 55°C kontinuierlich durch eine Korundmühle unter Erhalt einer homogenen Masse.

In der nachfolgenden Pasteurisierungsstufe wird die Mischung 15 Sekunden lang auf $95 \pm 1°C$ in einem Zylinder mit einer darin rotierenden Messerwelle mit aufgesetzten Abschabemessern erhitzt. Der Antrieb der Messerwelle wird auf 400 UpM reguliert. Die Beheizung des Zylinders erfolgt indirekt durch Dampf.

In dem folgenden Verfahrensschritt wird die Creme in einem Zweistufen-Verfahren zunächst auf 75°C, dann auf 50°C abgekühlt. Zwischen diesen beiden Verfahrensstufen wird in einem Homogenisator unter einem Druck von 170 bar $(1,7 \cdot 10^7$ Pa) erneut eine Homogenisierung vorgenommen.

Im nächsten Verfahrensschritt erfolgt das Aufschäumen der Mischung durch Einblasen von Stickstoffgas von 2 - 8 bar $(2 - 8 \cdot 10^5$ Pa) in einem Aufschlagzylinder, der mit einer Stiftenwelle ausgestattet ist.

In der letzten Verfahrensstufe wird die Kristallisierung der Fettkomponenten und der Zucker unter Rühren und Abkühlen der cremeartigen Masse auf 16°C durchgeführt. Dies erfolgt in einem Zylinder, der mit einer Messerwelle ausgestattet und mit einer Sole von -17°C gekühlt wird. Die Rotationsleistung des Zylinders beträgt 400 UpM.

Die erhaltene cremeartige Masse wird dann kühl gelagert und gegebenenfalls zur Füllung eines biskuitähnlichen Keks, Wiener Massen oder als Aufstrichcreme verwendet.

Trotz des verhältnismässig hohen Wassergehaltes der Cremefüllung von ca. 46 %, weist diese über einen Zeitraum von ca. 90 Tagen eine stabile Konsistens auf.

**Patentansprüche**

1. Süssware in Form einer weichen, mit einem Inertgas geschäumten Masse auf Basis einer Öl-in-Wasser-Emulsion, enthaltend Milchbestandteile, Fettkomponente(n), Zucker und Wasser, dadurch **gekennzeichnet,** dass die Süssware durch folgende Herstellungstufen erhältlich ist:

    (a) Vortemperieren von Quark und/oder Yoghurt oder einem Gemisch derselben auf 40 bis 50°C, und

    (b) Einrühren von Frisch- oder Kondensmilch unter Erhalt des Gemisches A;

    (c) homogenes Vermischen von Zucker und Johannisbrotkernmehl, unter Erhalt des Trockengemisches B;

    (d) Herstellen einer pastösen Masse C aus Fettkomponente(n) bei 50 bis 75°C;

    (e) Vermischen des Gemisches A mit dem Trockengemisch B und anschliessend

    (f) Zugabe der pastösen Masse C unter Rühren bei einer Temperatur von 50 bis 60°C;

    (g) im weiteren Zugabe von Aromen und Säureverstärker bis auf einen pH von 4,2 bis 5,0, und anschliessend homogenes 20- bis 25-minütiges Vermischen bei 50 bis 60°C;

    (h) Pasteurisieren der Mischung bei einer Temperatur von 95 bis 110°C nicht länger als 20 Sekunden, und anschliessend

    (i) Abkühlen der Mischung auf 40 bis 60°C;

    (j) Aufschäumen der Mischung durch Einblasen von Inertgas unter Erhalt einer cremeartigen Masse;

    (k) Kristallisieren wenigstens eines Teils der Fettkomponente(n) und des Zuckers unter Rühren und Abkühlen der cremeartigen Masse auf nicht mehr als 20°C,

    und wobei die Menge an Quark und/oder Yoghurt so gewählt wird, daß sie 30 bis 50 Gew. % beträgt, und die Gesamtmenge an nicht-lactoseartigem Zucker so, daß sie 10 bis 25 Gew. % beträgt, bezogen auf das Gesamtgewicht des Fertigproduktes.

2. Süssware nach Anspruch 1, dadurch **gekennzeichnet,** dass diese 0.1 bis 0,6 Gew.-% Johannisbrotkernmehl enthält.

3. Süssware nach Anspruch 1, dadurch **gekennzeichnet** dass als Fettkomponente(n) Pflanzenfett und/oder Butter verwendet werden.

**4.** Süssware nach Anspruch 1, dadurch **gekennzeichnet,** dass als Säureverstärker Milchsäure verwendet wird.

**5.** Süssware nach Anspruch 4, dadurch **gekennzeichnet,** dass die Milchsäure in Form von 50/50 G/V Milchsäure : Wasser zugegeben wird.

**6.** Süssware nach Anspruch 1, dadurch **gekennzeichnet,** dass der Säureverstärker bis auf einen pH von 4,5 bis 4,8 zugegeben wird.

**7.** Süssware nach Anspruch 1, dadurch **gekennzeichnet,** dass als Inertgas Stickstoffgas eingesetzt wird.

**8.** Süssware nach Anspruch 1, dadurch **gekennzeichnet,** dass ein Inertgasdruck in der Verfahrensstufe (j) von 2 bis 8 bar (2 - 8 $\cdot$ 10$^5$ Pa) wird.

**9.** Süssware nach Anspruch 1, dadurch gekennzeichnet, daß dem Trockengemisch B außerdem Vanillin und eine Mischung aus Milcheiweiß, Pflanzenfett und Glucose zugegeben werden.

**10.** Süssware nach Anspruch 1, dadurch **gekennzeichnet,** dass in Verfahrensstufe (g) als Aromen Zitronenaroma, Quarkaroma, Vanillin, sowie gegebenenfalls Branntwein zugegeben werden.

**11.** Süssware nach Anspruch 1, dadurch **gekennzeichnet,** dass die Temperatur in den einzelnen Verfahrensstufen wie folgt eingestellt wird: Stufe (a): 45°C, Stufe (b): 60°C, Stufen (d) und (e): 60°C, Stufe (g): 55°C, Stufe (h): 95-96°C, Stufe (k): 16°C.

**12.** Süssware nach Anspruch 1, dadurch **gekennzeichnet,** dass die Rührzeit in den einzelnen Verfahrensstufen wie folgt gewählt wird: Stufe (b): 10 bis 15 Minuten, Stufe (d): 2 bis 3 Minuten, Stufe (f): 15 Minuten, Stufe (g): 22 Minuten, Stufe (h): 15 Sekunden.

**13.** Verfahren zur Herstellung einer Süssware gemäss Ansprüchen 1 bis 12, **gekennzeichnet** durch die Folge von Herstellungsstufen gemäss Anprüchen 1 bis 12.

**Claims**

**1.** Confectionery product in the form of a soft mass, foamed using an inert gas, which is based oil an oil-in-water emulsion, containing milk constituents, fat component(s), sugar and water, characterised in that the confectionery product is obtainable by the following production steps:

(a) preheating soft curd cheese and/or yoghurt or a mixture thereof at 40 to 50°C, and

(b) stirring in fresh milk or condensed milk to obtain mix A;

(c) homogeneously mixing sugar and carob flour to obtain dry mix B;

(d) producing a pasty mass C composed of fat component(s) at 50 to 75°C;

(e) mixing mix A with dry mix B and subsequently

(f) adding the pasty mass C with stirring at a temperature of 50 to 60°C;

(g) furthermore adding flavourings and acidulant to a pH of 4.2 to 5.0, and subsequently homogeneously mixing for 20 to 25 minutes at 50 to 60°C;

(h) pasteurising the mixture at a temperature of 95 to 110°C for no longer than 20 seconds, and subsequently

(i) cooling the mixture to 40 to 60°C;

(j) foaming the mixture by blowing in inert gas to obtain a creamy mass;

(k) crystallising at least a part of the fat component(s) and the sugar with stirring and cooling of the creamy mass to no higher than 20°C,

and the amount of soft curd cheese- and/or yoghurt being selected so that it is 30 to 50% by weight, and the total amount of non-lactose sugar being selected so that it is 10 to 25% by weight, relative to the total weight of the finished product.

**2.** Confectionery product according to Claim 1, characterised in that it contains 0.1 to 0.6% by weight of carob flour.

**3.** Confectionery product according to Claim 1, characterised in that the fat component(s) used is (are) vegetable fat and/or butter.

4. Confectionery product according to Claim 1, characterised in that the acidulant used is lactic acid.

5. Confectionery product according to Claim 4, characterised in that the lactic acid is added in the form of 50/50 w/v lactic acid: water.

6. Confectionery product according to Claim 1, characterised in that the acidulant is added to a pH of 4.5 to 4.8.

7. Confectionery product according to Claim 1, characterised in that the inert gas used is nitrogen gas.

8. Confectionery product according to Claim 1, characterised in that an inert gas pressure in process step (j) of 2 to 8 bar (2-8$\bullet$10$^5$ Pa) is built up.

9. Confectionery product according to Claim 1, characterised in that vanillin and a mixture of milk protein, vegetable fat and glucose are additionally added to dry mix B.

10. Confectionery product according to Claim 1, characterised in that the flavourings added in process step (g) are lemon flavouring, soft curd cheese flavouring, vanillin, and, optionally, spirits.

11. Confectionery product according to Claim 1, characterised in that the temperature in the individual process steps is adjusted as follows: step (a): 45°C, step (b): 60°C, steps (d) and (e): 60°C, step (g): 55°C, step (h): 95-96°C, step (k): 16°C.

12. Confectionery product according to Claim 1, characterised in that the stirring time in the individual process steps is selected as follows: step (b): 10 to 15 minutes, step (d): 2 to 3 minutes, step (f): 15 minutes, step (g): 22 minutes, step (h): 15 seconds.

13. Process for the production of a confectionery product according to Claims 1 to 12, characterised by the sequence of production steps according to Claims 1 to 12.

**Revendications**

1. Confiserie sous forme de masse molle que l'on a fait mousser avec un gaz inerte, à base d'une émulsion huile-dans-eau, contenant des constituants du lait, un ou des composant(s) gras, du sucre et de l'eau, caractérisée en ce que la confiserie est obtenue par les étapes suivantes de fabrication:
   (a) chauffage préalable de fromage blanc et/ou de yaourt, ou d'un mélange de ceux-ci, à 40°C - 50°C, et
   (b) incorporation de lait frais ou condensé, pour l'obtention d'un mélange A;
   (c) mélange, jusqu'à homogénéité, de sucre et de farine de graines de caroube, pour l'obtention d'un mélange sec B;
   (d) fabrication d'une masse pâteuse C du ou des composant(s) gras, à 50°C - 75°C;
   (e) mélange du mélange A avec le mélange sec B, et ensuite,
   (f) addition de la masse pâteuse C, sous agitation, à une température de 50°C à 60°C;
   (g) puis addition d'arômes et d'acidifiants jusqu'à un pH de 4,2 à 5,0, et ensuite mélange jusqu'à homogénéité, pendant 20 à 25 minutes et à 50°C - 60°C;
   (h) pasteurisation du mélange à une température de 95°C à 110°C, pendant une durée ne dépassant pas 20 secondes, et ensuite,
   (i) refroidissement du mélange à 40°C - 60°C;
   (j) moussage du mélange par insufflation de gaz inerte, pour l'obtention d'une masse crémeuse;
   (k) cristallisation d'au moins une partie du ou des composant(s) gras et du sucre, sous agitation et refroidissement de la masse crémeuse jusqu'à une température ne dépassant pas 20°C;
   les quantités de fromage blanc et/ou de yaourt étant choisies de façon à représenter de 30 % à 50 % en poids, et la quantité totale de sucre, non compris le sucre de type lactose, étant choisie de façon à représenter de 10 % à 25 % en poids, par rapport au poids total du produit fini.

2. Confiserie conforme à la revendication 1, caractérisée en ce qu'elle contient de 0,1 % à 0,6 % en poids de farine de graines de caroube.

3. Confiserie conforme à la revendication 1, caractérisée en ce que l'on emploie, en tant que composant-(s) gras, de la graisse végétale et/ou du beurre.

4. Confiserie conforme à la revendication 1, caractérisée en ce que l'on emploie, en tant qu'acidifiant, de l'acide lactique.

5. Confiserie conforme à la revendication 4, caractérisée en ce que l'acide lactique est ajouté sous forme d'un mélange 50/50 P/V (acide lactique)/eau.

6. Confiserie conforme à la revendication 1, caractérisée en ce que l'on ajoute l'acidifiant jusqu'à atteindre un pH de 4,5 à 4,8.

7. Confiserie conforme à la revendication 1, caractérisée en ce que l'on emploie de l'azote en tant que gaz inerte.

8. Confiserie conforme à la revendication 1, caractérisée en ce que l'on établit, dans l'étape de procédé (j), une pression de gaz inerte de 2 à 8 bars (2-8.10$^5$ Pa).

9. Confiserie conforme à la revendication 1, caractérisée en ce que l'on ajoute en plus, au mélange sec B, de la vanilline et un mélange de lactalbumine, de graisse végétale et de glucose.

10. Confiserie conforme à la revendication 1, caractérisée en ce que, dans l'étape de procédé (g), on ajoute, en tant qu'arômes, de l'arôme de citron, de l'arôme de fromage blanc, de la vanilline, ainsi que, le cas échéant, de l'eau-de-vie.

11. Confiserie conforme à la revendication 1, caractérisée en ce que, dans les étapes respectives de procédé, la température est réglée comme suit: 45°C dans l'étape (a); 60°C dans l'étape (b); 60°C dans les étapes (d) et (e); 55°C dans l'étape (g); 95°C - 96°C dans l'étape (h); 16°C dans l'étape (k).

12. Confiserie conforme à la revendication 1, caractérisée en ce que, dans les étapes respectives, la durée d'agitation est choisie comme suit: 10 à 15 minutes dans l'étape (b); 2 à 3 minutes dans l'étape (d); 15 minutes dans l'étape (f); 22 minutes dans l'étape (g); et 15 secondes dans l'étape (h).

13. Procédé de fabrication d'une confiserie conforme aux revendications 1 à 12, caractérisé par la succession d'étapes de fabrication conforme aux revendications 1 à 12.